# EUROPEAN PATENT APPLICATION

(11) **EP 0 606 122 A1**
(43) Date of publication of application: **13.07.1994**
(21) Application number: 94200010.0
(22) Date of filing: 05.01.1994
(51) Int. Cl.: B01D 71/02

(54) **Ceramic ultrafiltration membrane and method of producing it**

(30) Priority: 08.01.1993 NL 9300038
(71) Applicant: Hoogovens Industrial Ceramics B.V., NL-1970 CA Ijmuiden (NL)
(72) Inventor: Kumar, Krishnankutty-Nair Padma, NL-7522 NP Enschede (NL); Keizer, Klaas, NL-7532 XL Enschede (NL); Burggraaf, Anthonie Jan, NL-7548 AM Boekelo (NL)
(74) Representative: de Bruijn, Leendert C.

(57) **Abstract**

A method is described for manufacturing a titanium-dioxide-containing ultrafiltration membrane by crystallization of a titanium hydroxide sol in the presence of a metal oxide having essentially the rutile structure, such as tin dioxide, followed by thermal treatment. A description is also given of a heat-resistant ultrafiltration membrane having a mean pore size between 3 and 100 nm and a porosity of at least 10%, composed of metal oxides which have essentially the rutile structure, the metal oxides containing 60-90 mol% titanium dioxide and 10-40 mol% tin dioxide and possibly aluminium oxide in addition.

## Description

The invention relates to a method of manufacturing a titanium-dioxide-containing ultrafiltration membrane by crystallization from a titanium hydroxide sol, followed by thermal treatment. The invention also relates to a thermally stable ultrafiltration membrane based on titanium dioxide.

Ceramic membranes which are designed for use as an ultrafiltration element or as a catalyst material are generally composed of aluminium oxide, possibly mixed with small amounts of other metal oxides. The ultrafiltration layer, which has a pore size in the order of 3 nm to 100 nm, is usually applied to a macroporous support layer having pore sizes in the micrometre range.

In view of the high chemical stability and the beneficial catalytic and photochemical properties, ceramic membranes based on titanium dioxide instead of aluminium oxide are sometimes preferred. The problem with titanium dioxide is, however, that if it is formed as a precipitate from a hydroxide sol, which is a method necessary to obtain pores in the nanometre range, the anatase phase is virtually always produced. Anatase is a meta-stable crystalline form of titanium dioxide which gradually and irreversibly changes into rutile at a temperature of approximately 450°C or higher, rutile being the stable crystalline form of titanium dioxide. If a titanium dioxide membrane produced by known methods is heated to temperatures in the vicinity of 450°C, a drastic reduction of the specific surface and of the porosity occurs as a consequence of the phase change from anatase to rutile, as a result of which the membrane becomes unusable for filtration purposes and catalytic applications. In addition, the production of titanium dioxide membranes is appreciably more troublesome than that of aluminium oxide membranes and they can only be obtained free of defects if binders such as polyvinyl alcohol are used (see also "Inorganic Membranes; Synthesis, Characteristics and Applications" (1991), Ramesh R. Brave, Van Nostrand Reinhold, New York, pages 35-36).

EP-A-401,928 describes a method of producing an ultrafiltration membrane having a binary top layer (ultrafiltration layer) composed of aluminium oxide and 35% by weight of cerium dioxide or titanium dioxide. In this process, a binder is added, together with sulphate to stabilize the anatase phase of titanium dioxide at a fairly high temperature. The membrane obtained in this way is therefore largely composed of aluminium oxide.

JP-A-63-210027 discloses a process for producing a crystalline titanium oxide and tin oxide sol by autoclave treatment of a gel containing titanium and tin compounds.

The object of the invention is to provide a ceramic membrane which is essentially composed of titanium dioxide and is suitable for use as an ultrafiltration membrane and as a catalyst material at high temperature.

It has now been found that membranes can be obtained which are based on titanium dioxide and have pores in the ultrafiltration range and in which the titanium dioxide has the stable rutile structure from the outset, with the result that the membranes can be heated to high temperatures (at least 800°C) without the properties needed for ultrafiltration and catalysis being lost.

The method according to the invention is characterized in that the crystallization of titanium dioxide from a titanium hydroxide sol is carried out in the presence of a metal oxide having essentially the rutile structure.

Suitable as metal oxide having essentially the rutile structure is, in particular, tin dioxide (cassiterite).

The membrane can be produced by a procedure known per se, the sol-gel procedure. In this process, a hydrolysable precursor of titanium dioxide, for example a titanium tetraalkoxide, is hydrolysed to form a gel-like precipitate, which is then dispersed again with the aid of an acid to form a titanium hydroxide sol or a titanium oxide hydroxide sol. Said sol is cast, by slip casting, film coating or otherwise, onto an auxiliary support, such as a glass plate, or, in the case of the manufacture of a composite membrane, applied to a macroporous support composed, for example, of α-aluminium oxide. The layer obtained is dried and given a thermal treatment to obtain an anhydrous titanium dioxide and consolidate the nanometre structure.

According to the invention, the metal oxide having the rutile structure, in particular tin dioxide, and preferably a hydrolysable precursor thereof is now added to the hydrolysable precursor of titanium dioxide. Suitable hydrolysable precursors of tin dioxide are, for example, tin tetrahalides and tin tetraalkoxides. The precursor of tin dioxide (such as SnCl₄) hydrolyses more rapidly than the precursor of titanium dioxide, with the result that nuclei are produced on which titanium dioxide can grow epitaxially with the rutile structure.

In general, at least 10 mol% tin dioxide should be used in order to bring about a usable degree of rutile formation at the very beginning. With contents of more than 40 mol% tin dioxide, the rutile structure is found to give way to a solid-state compound of tin dioxide and titanium dioxide, which will be undesirable for most applications. Preferably, a molar ratio of titanium dioxide to tin dioxide of between 85:15 and 65:35 is used, more preferably a molar ratio of between 82:18 and 70:30. The best results are obtained with a titanium dioxide/tin dioxide molar ratio between 81:19 and 75:25.

If desired, other metal oxides ("dopes") can be added to the sol of titanium dioxide and tin dioxide in order to obtain membranes having particular properties. An example of this which has been found useful is the addition of aluminium oxide hydroxide (A100H, boehmite) in an amount of 0-15 mol%, in particular 3-13 mol% (calculated as Al₂O₃) based on the total amount of metal oxides.

The membranes produced by the method according to the invention can be calcined up to 800°C and, under these circumstances, retain their beneficial characteristics in relation to pore diameter, porosity and specific surface. The pore diameter of the membranes obtained is between 3 and 100 nm, in particular between 4 and 25 nm. The porosity is greater than 10%, and up to e.g. 60%, in particular between 30 and 45%. Up to 800°C, the specific surface is more than 20 m²/g, in particular from 40 to 180 m²/g. If aluminium oxide is added, membranes are obtained which have a still higher specific surface and a lower pore diameter.

The invention also relates to ceramic membranes which can be obtained by the method described above.

The invention furthermore relates to heat-resistant ceramic membranes having a mean pore size of between 3 and 100 nm and a porosity of at least 10%, composed of metal oxides having essentially the rutile structure, the metal oxides containing 60-90 mol% titanium dioxide and 10-40 mol% tin dioxide. In particular, the metal oxides contain 65-85 mol% titanium dioxide and 15-35 mol% tin dioxide. In an advantageous embodiment, the metal oxides contain 60-85 mol% titanium dioxide, 10-35 mol% tin dioxide and 0-15 mol% aluminium oxide.

### Example I

A solution of 0.815 mol of titanium tetraisopropoxide and 0.185 mol of tin tetrachloride in 1.5 l of isopropyl alcohol was added dropwise at 25°C to 3.6 l of a vigorously stirred isopropyl alcohol/water mixture (91:9 v/v). A gelatinous precipitate was produced. The precipitate was washed three times with 5 1 of water to remove alcohol residues and then dispersed in a solution of 0.5 mol of nitric acid in 4 l of water (0.15 M HNO₃) (H⁺/Ti⁴⁺ ratio approximately 0.5). The dispersion was refluxed for 12 to 16 hours at 80°C. The sol obtained had a pH of approximately 2 and a concentration of 0.3 M Ti_{0.815}Sn_{0.185}O₂.

To produce unsupported membranes, the sol was poured onto a glass Petri dish and dried at 40°C and at a relative humidity of 60%. The dried membranes were removed from the Petri dish and calcined at various temperatures.

To produce (composite) membranes supported on a substrate, the sol was applied in layers to an α-aluminium oxide support and also dried at 40°C and at a relative humidity of 60%. The dried membranes were calcined at various temperatures.

The dried membranes were heated to temperatures varying from 200°C to 1000°C at a heating rate of 100°C per hour and cooled to room temperature again in the furnace. The membranes supported on a substrate were heated at a rate of 15°C/hour, followed by cooling at a rate of 30°C/hour.

The crystal diameter of the membrane calcined at 800°C was 71 nm, the calculated geometrical surface 21 m²/g, the measured specific surface (S_{BET}) 18 m²/g, the porosity 40% and the mean pore diameter 24 nm.

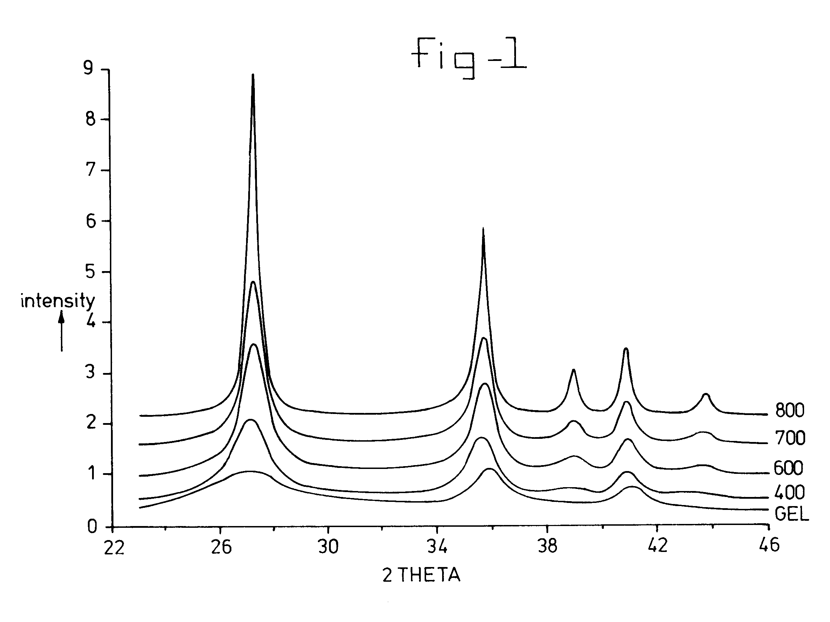

The X-ray diffraction spectrum, obtained with a Philips PW 1710 diffractometer using CuKα radiation, of the membranes calcined at various temperatures is shown in Figure 1.

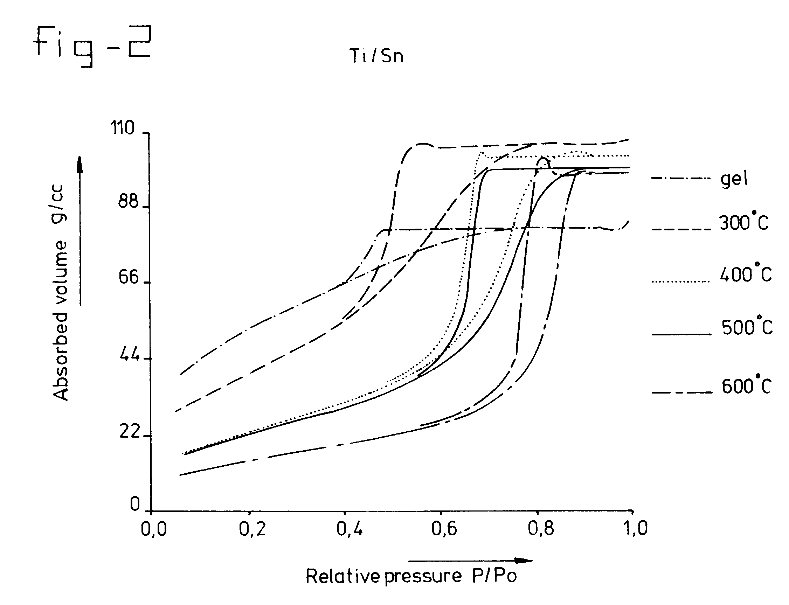

The results of the N₂ physisorption measurements of these calcined membranes, which had been degassed beforehand at 110°C, are shown in Figure 2, said results being obtained with a Micromeritics ASAP 2400 system. The BET constant was in the range from 100 to 200, which indicates the absence of microporosity.

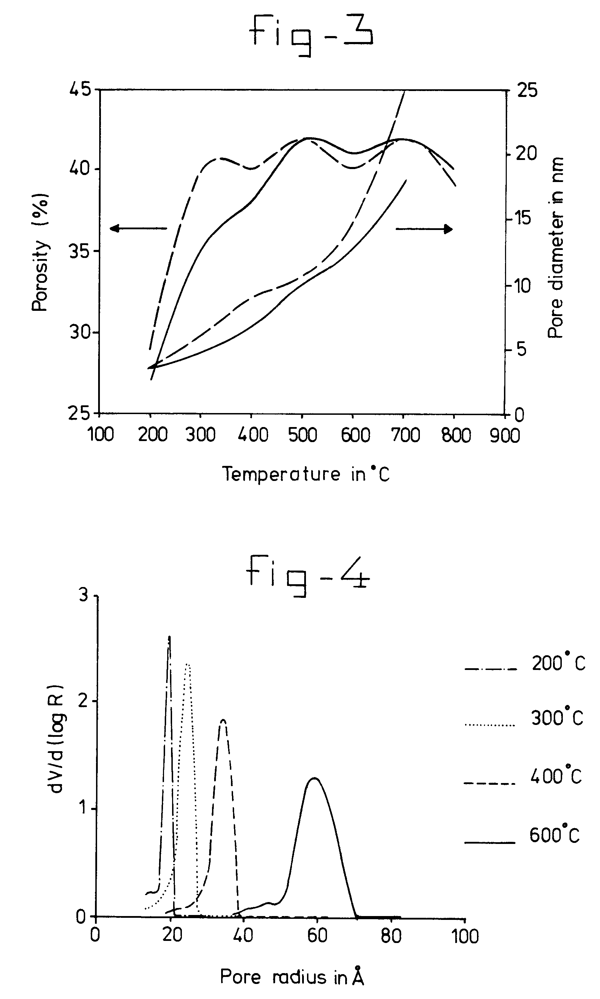

Figures 3 and 4 show the porosity and pore diameter, or pore size distribution, of membranes calcined at various temperatures. In Figure 3, the lowermost lines relate to calcining for 5 min, the uppermost lines to calcining for 8 hours.

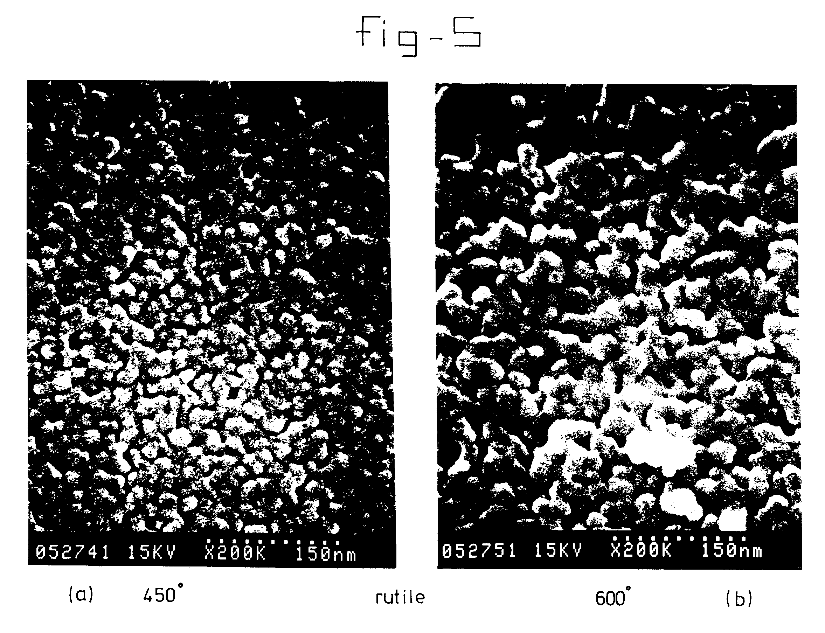

Figures 5a and 5b show the FE-SEM (field-emission scanning electron microscope) pictures (Hitachi S-900 SEM) of unsupported membranes heated to 450°C and 600°C, respectively.

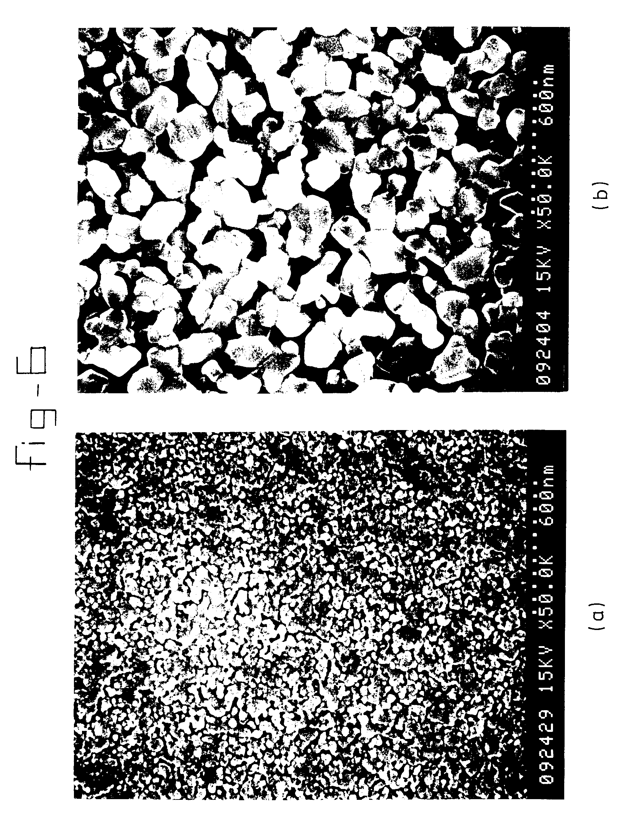

Figures 6a and 6b show the FE-SEM pictures of the supported and unsupported membranes, respectively, heated for 8 hours at 850°C.

### Example II

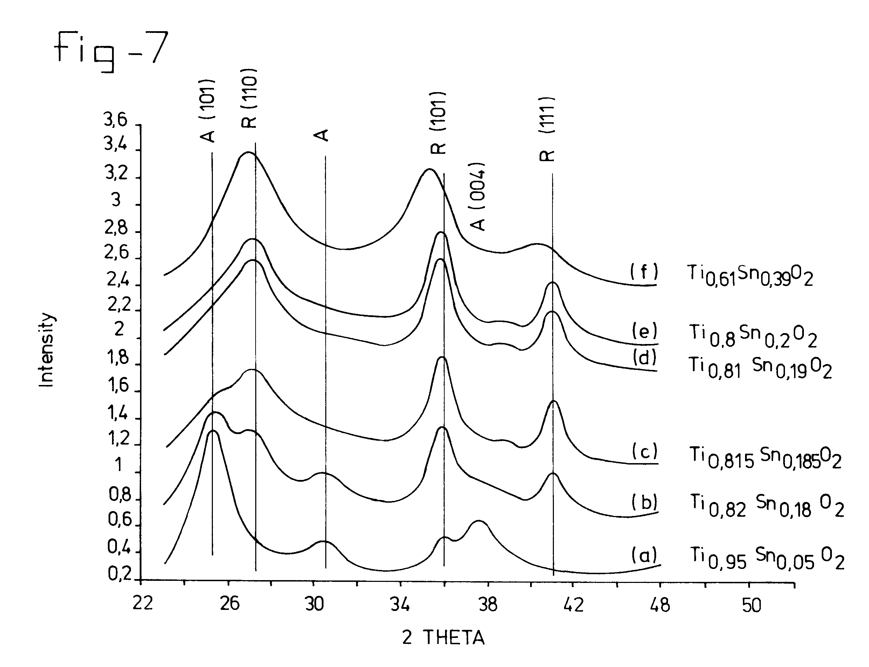

The method of Example I was repeated, but the amount of tin tetrachloride was varied. Instead of 0.185 mol, 0.05, 0.18, 0.19, 0.20 and 0.39 mol, respectively, of SnCl₄ was used, the sum of the amounts of SnCl₄ and Ti(OiPr)₄ always being 1 mol. Figure 7 shows the X-ray diffraction spectrum of the membranes obtained in this way and of the corresponding membrane according to Example I.

### Example III

The method of Example I was repeated, with the difference that an amount (91 ml) of 1 molar boehmite sol (AlOOH) was added to the sol obtained as a result of the treatment with acid, this amount being such that the dried membrane contained 9% by weight of aluminium oxide (Al₂O₃).

The crystal diameter of the membrane calcined at 800°C was 29 nm, the calculated geometrical surface 57 m²/g, the measured specific surface (S_{BET}) 43 m²/g, the porosity 42% and the mean pore diameter 15 nm.

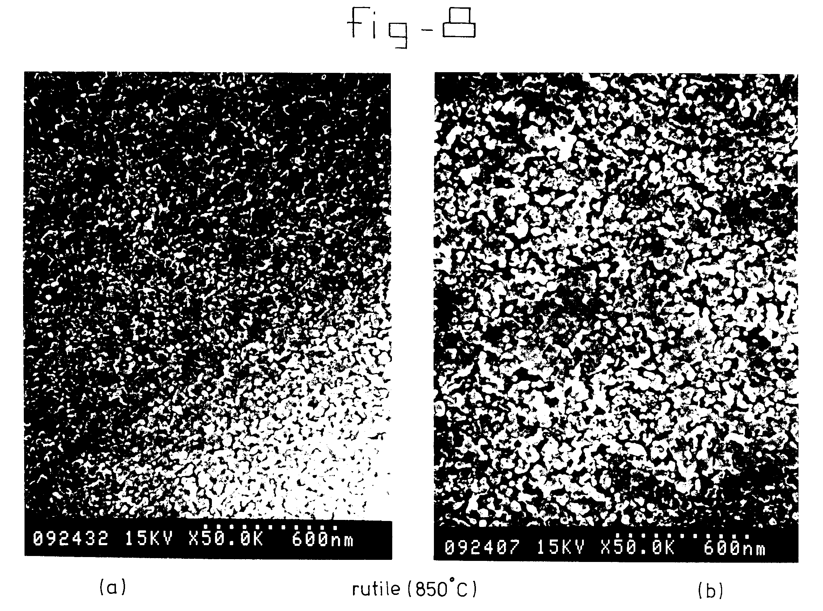

Figures 8a and 8b show the FE-SEM pictures of the supported and unsupported membranes, respectively, heated for 8 hours at 850°C.

### Comparison Example

The method of Example I was repeated, with the difference that no tin tetrachloride was added.

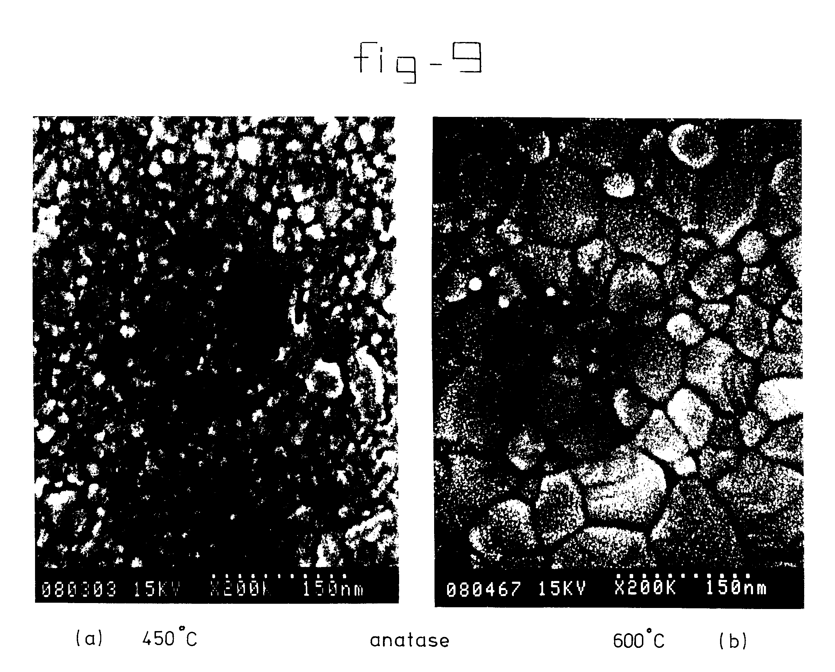

Figures 9a and 9b show the FE-SEM pictures of the membranes heated to 450 and 600°C, respectively.

## Claims

1. Method of manufacturing a titanium-dioxide-containing ultrafiltration membrane by crystallization of a titanium hydroxide sol, followed by casting of a membrane layer, drying and thermal treatment, characterized in that the crystallization is carried out in the presence of a metal oxide having essentially the rutile structure.

2. Method according to Claim 1, wherein the metal oxide having essentially the rutile structure is tin dioxide.

3. Method according to Claim 1 or 2, wherein the metal oxide having essentially the rutile structure is produced in the sol from a hydrolysable metal salt.

4. Method according to one of Claims 1-3, wherein a molar ratio of titanium dioxide to tin dioxide of between 85:15 and 65:35 is used.

5. Method according to one of Claims 1-4, wherein that a molar ratio of titanium dioxide to tin dioxide of between 82:18 and 70:30 is used.

6. Method according to one of Claims 1-5, wherein aluminium oxide is also crystallized from the sol in an amount of 0-15 mol% based on the total amount of metal oxides.

7. Ultrafiltration membrane obtainable by using the method according to one of Claims 1-6.

8. Heat-resistant ultrafiltration membrane having a mean pore size of between 3 and 100 nm and a porosity of at least 10%, composed of metal oxides having essentially the rutile structure, characterized in that the metal oxides comprise 60-90 mol% titanium dioxide and 10-40 mol% tin dioxide.

9. Ultrafiltration membrane according to Claim 8, wherein the metal oxides comprise 60-85 mol% titanium dioxide, 10-35 mol% tin dioxide and 0-15 mol% aluminium oxide.
